# EUROPEAN PATENT SPECIFICATION

(11) **EP 0 916 265 B1**
(45) Date of publication and mention of the grant of the patent: **09.05.2001**
(21) Application number: 98203939.8
(22) Date of filing: 15.01.1993
(51) Int. Cl.: A22C 21/00

(54) **Device and method for processing slaughtered animals, in particular birds**
Vorrichtung und Verfahren zum Verarbeiten von Schlachttieren insbesondere Geflügel
Dispositif et méthode pour traiter des animaux abattus particulièrement des volailles

(30) Priority: 17.01.1992 NL 9200090
(43) Date of publication of application: 19.05.1999
(62) Divisional of application: 93904388.1
(73) Proprietor: STORK PMT B.V., 5831 AV Boxmeer (NL)
(72) Inventor: Janssen, Petrus Christianus Hendrikus, 5455 GP Wilbertoord (NL); Janssen, Cornelis Joannes, 5824 AB Holthees (NL); Peters, Erik Hendrikus Werner, 5831 ME Boxmeer (NL); Van Den Niewelaar, Adrianus Josephes, 5421 XG Gemert (NL)
(74) Representative: Mertens, Hans Victor

(56) References cited:
- EP-A- 0 086 700
- EP-A- 0 336 162
- EP-A- 0 381 093
- EP-A- 0 444 782
- DE-C- 3 247 327
- FR-A- 2 589 452
- GB-A- 1 164 813
- NL-A- 8 901 510
- US-A- 2 438 608
- US-A- 2 557 707
- US-A- 2 625 707
- US-A- 3 518 717
- US-A- 4 213 229
- US-A- 4 780 930

## Description

The invention relates to a device and method for processing slaughtered animals, in particular birds, according to the preamble of claims 1 and 20, respectively.

Such a device and method are known from NL-A-8901510. This publication describes a method and device for controlling the processing of poultry, the device comprising multiple parallel production lines along which one or more processing stations are disposed. Each different production line defines a different route. The processing of the poultry, more in particular the choice of the appropriate production line and hence the choice of a certain operation or range of operations, is controlled on the basis of data derived from recorded parameters concerning the poultry being processed.

In the known device it is not possible to disregard certain processing operations along one of the routes of the conveyor. Nor is it possible, for example, to make a choice between two processing machines disposed on either side of the track.

A still further disadvantage of the known device is that it is designed to cause a fixed series of processing operations to be carried out on the slaughtered animal along one of the routes; it is not capable of causing the processing range to be adapted depending on certain characteristics of the slaughtered animal.

The object of the invention is to provide a device and method for controlling the processing of a slaughtered animal being conveyed along a processing station.

According to the invention, the device and method are characterized according to claims 1 and 20, respectively.

One may thus avoid using parallel transport tracks for processing animals in different ways. The processing equipment can be used more efficiently in one single transport track, processing each animal in a specific manner by selecting the equipment to be used and to be avoided.

EP-A-0 336 162 discloses taking a part of a slaughtered animal into and out of the working range of cutting means of a processing machine by moving the cutting means into and out of the route of the slaughtered animal.

In a preferred embodiment of the device according to the invention, the connecting means have two or more projections which project at right angles to the axis of rotation of the connecting means, and which can interact with projection operating means disposed along the track. Advantageously, the length of at least one of the projections is different from the length of the other projections. This provides the possibility of making all carriers take up the same initial position prior to a processing operation.

In a still further advantageous embodiment the leg carrier comprises means for accommodating the legs of the slaughtered animal, and fixing means which, interacting with the accommodating means, are adapted to enclose each leg like a ring. Preferably, the accommodating means are formed by an essentially elongated, plate-shaped element. This has the advantage that the accommodating means can be used in a production line such as that described in EP-A-0 159 731 in the name of applicants. The carriers of the device are in this case guided along the guides 6 mentioned in the patent specification, so that a very stable suspension of the animal is ensured during conveyance.

The invention will be explained in more detail with reference to the accompanying drawings, in which:
Fig. 1 shows a short section of a conveyor for slaughtered poultry;
Figs. 2A and 2B show top views, partially in cross-section of a closed and open leg carrier respectively of the conveyor of Fig. 1;
Fig. 3 shows three carriers of the conveyor disposed one after the other, in different positions along the track;
Fig. 4 shows a device from Fig. 1 turned through 90°;
Fig. 5 shows schematically in top view the interaction between a Maltese cross in the connecting means and projection operating elements disposed along the track; and
Fig. 6 shows schematically in top view a processing station for cutting wings of poultry, which is adapted for cooperation with the device for conveying slaughtered poultry.

In the drawings, like reference symbols designate like parts.

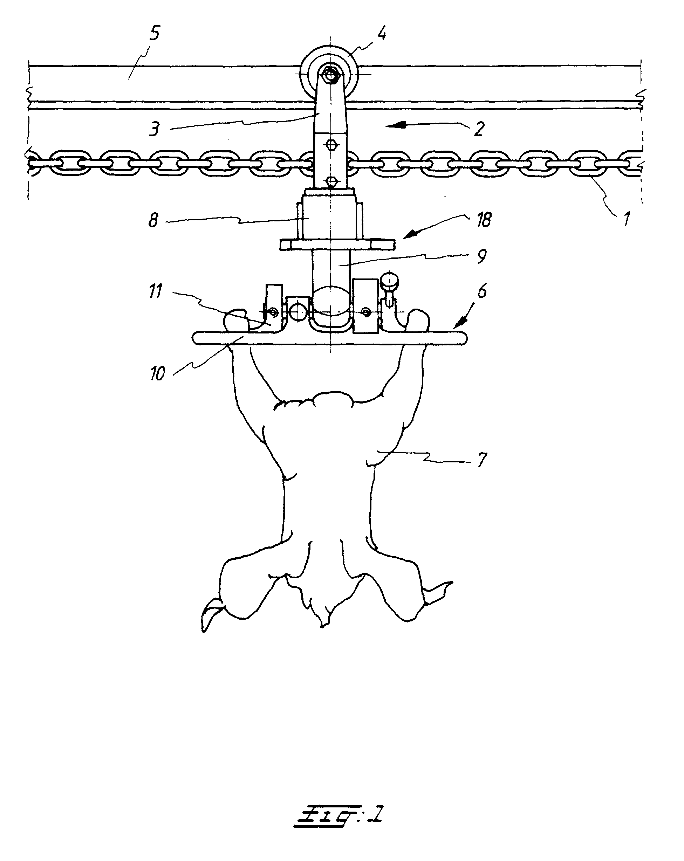

The conveyor shown in Fig. 1 is formed by a driven chain conveyor 1, provided with trolleys 2 which in a usual manner comprise a fork-shaped element 3 with wheels 4. The wheels 4 are guided along a rail 5, the shape of which determines the track of the conveyor. This track runs in the usual way through one or more processing or inspection stations (not shown). Each trolley 2 is provided with a leg carrier 6, which is suitable for accommodating the leg of a slaughtered animal, here a slaughtered bird 7, or a part thereof, and carrying it along the track of the conveyor. Each carrier 6 is fixed by way of adjustable connecting means 8 to the corresponding trolley 2. These connecting means 8 make it possible for each carrier 6 during operation to be rotatable through a predetermined angle on a vertical axis.

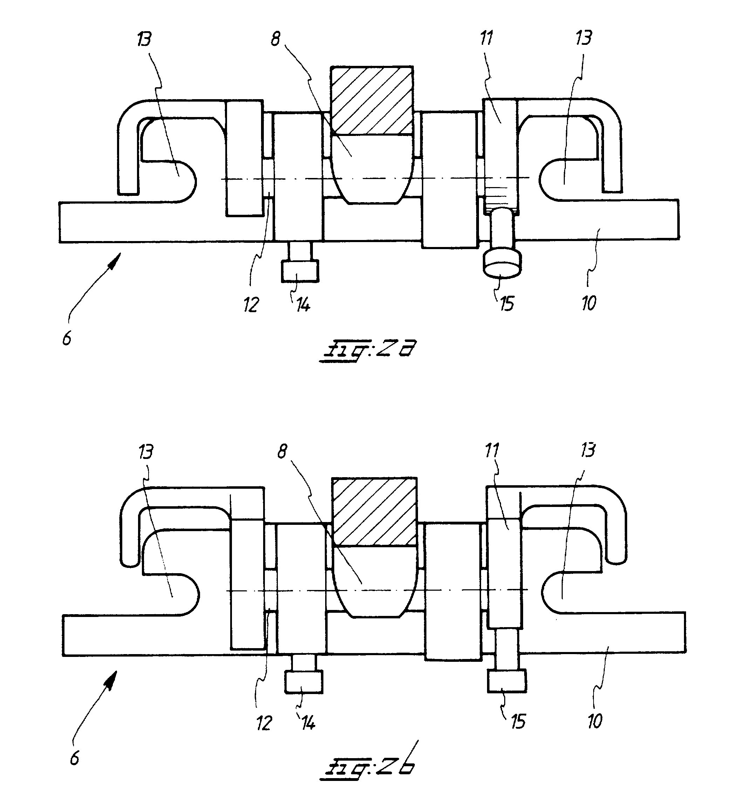

It can be seen in Fig. 2 that a carrier 6 is made up of a bearing element 10 and a shut-off device 11, which can pivot relative to each other and relative to the connecting means 8 about an axis 12. The bearing element 10 is provided with two recesses 13, in which the legs of the bird 7 can be accommodated. These recesses 13 have such dimensions that the bird 7 can hang by its tarsal joints. A virtually closed ring, in which the tarsal joint is securely confined, is produced by closing shut-off device 11. The carrier 6 also has two carrier control levers 14, 15, which can produce the rotation of the bearing element 10 and the shut-off device 11 about the axis 12.

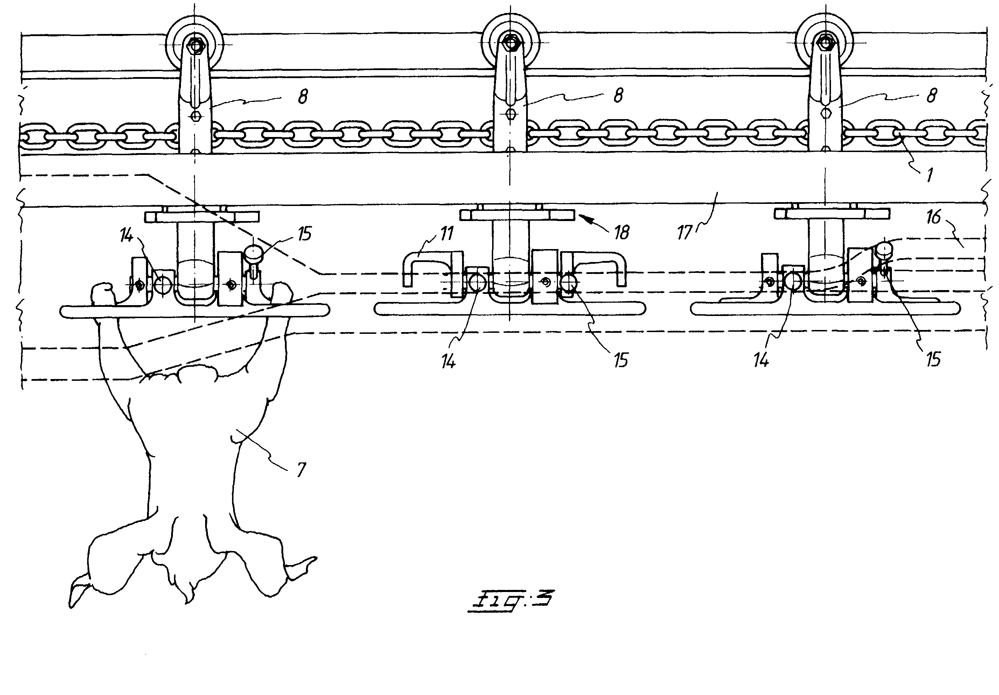

Fig. 3 shows how the two carrier control levers 14, 15 interact with guides 16 fitted on a wall (not shown) lying above the plane of the drawing, which interaction will be described below. In order to guarantee good stability in the directions at right angles to the direction of conveyance, the connecting means 8 are guided during operation of the levers 14, 15 between two parallel walls 17 running parallel to the conveyor chain 1, only one of which is shown in the figure.

The lefthand device of the three devices illustrated here shows a carrier 6, in the closed position, in which carrier a bird 7 is hanging by the legs. This situation is identical to that shown in Fig. 1. When the chain conveyor 1 moves to the right in the drawing, the carrier control lever 15 at a given moment comes into contact with guide 16, and said lever will be forced downwards as a result of this intersection, thus opening the shut-off device 11. The carrier assembly will assume the position shown in the centre of Fig. 3 when the slope of the guide 16 ends.

In the carrier on the right in the figure it can be seen how the shut-off device 11 closes again when the carrier control lever 15 goes against a rising guide (groove) 16 on moving further to the right. As a result of this the shut-off device 11 closes again.

The discharging (not shown) of the bird 7 can take place by forcing the carrier control lever 14 upwards when the shut-off device 11 is open, causing the recesses 13 to be directed with their openings downwards, as a result of which the bird 7 can be discharged from them.

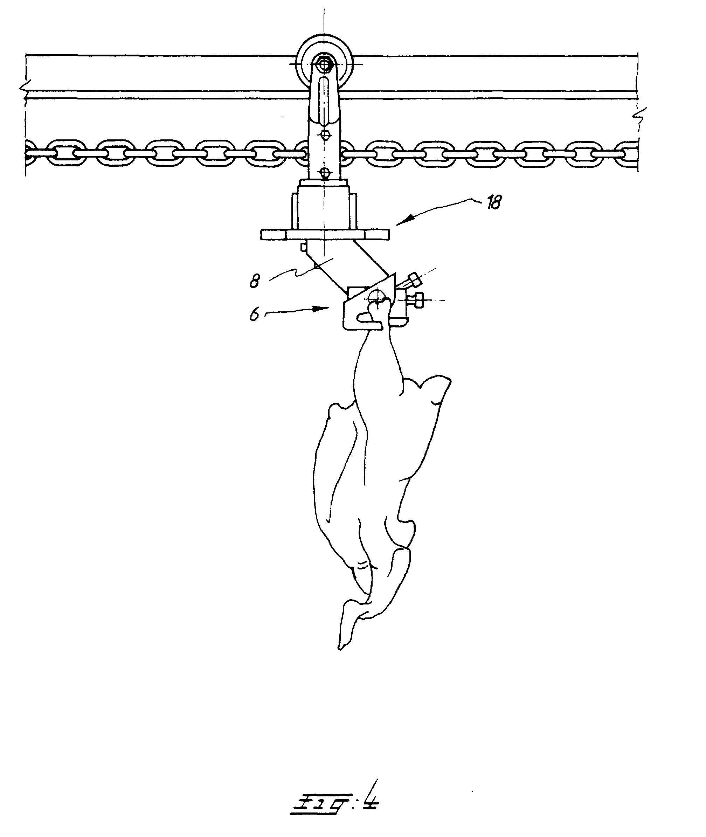

Fig. 4 shows a carrier 6 which is turned through 90° relative to the carrier from Fig. 1. The figure shows clearly that the carrier 6 is disposed eccentrically relative to the trolley, which makes it possible to bypass or actually seek the working range of certain processing machines disposed along the route.

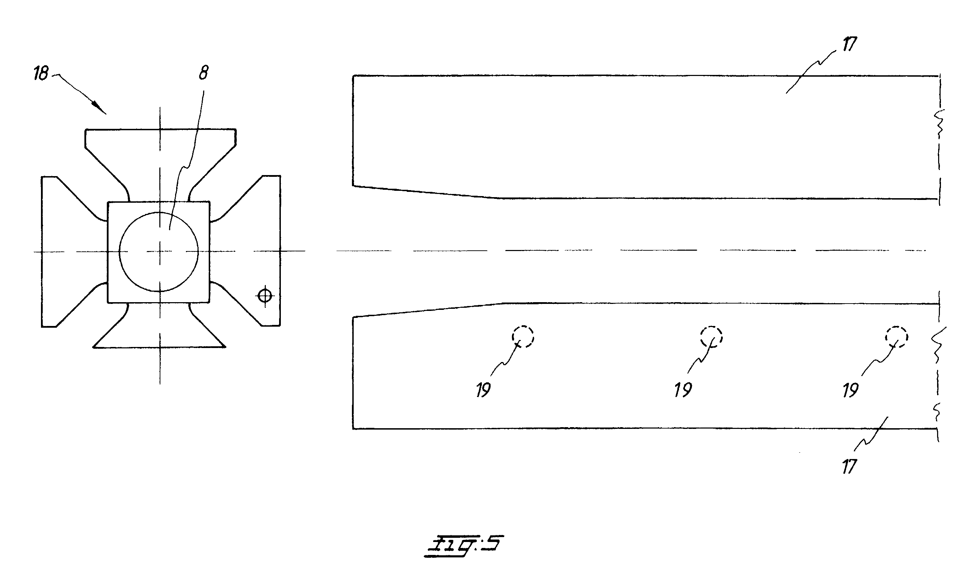

In order to be able to rotate the carrier 6 about a vertical axis, the connecting means 8 are provided with a Maltese cross 18 (Fig. 5) which interacts with arm operating elements 19 fitted at the bottom of the wall 17, and in the case of which the wall 17 acts as a guide for the connecting means. The rotation of the carrier 6 is determined by the interaction between a segment of the Maltese cross, and also by the angular orientation fixing means present (not shown) in the connecting means 8.

Fig. 5 shows that the segment with the smallest radial dimensions passes the three arm operating elements 19 undisturbed. It will be clear that no matter what the initial position of the Maltese cross 18 is, after the three arm operating elements 19 have been passed, the cross always takes up the same position, which is advantageous for then making a processing selection.

When a selection of a processing operation on the animal is being made, after said animal has been checked for certain characteristics by a recording station, it is possible with the aid of the result of the check to operate the arm operating elements 19, so that an angular orientation to be achieved by the carrier 6 can be selected. In the same way it is possible to have a processing station bypassed by the carrier 6, through the fact that as a result of its eccentric position outside the working range of the processing station in question the carrier passes said station.

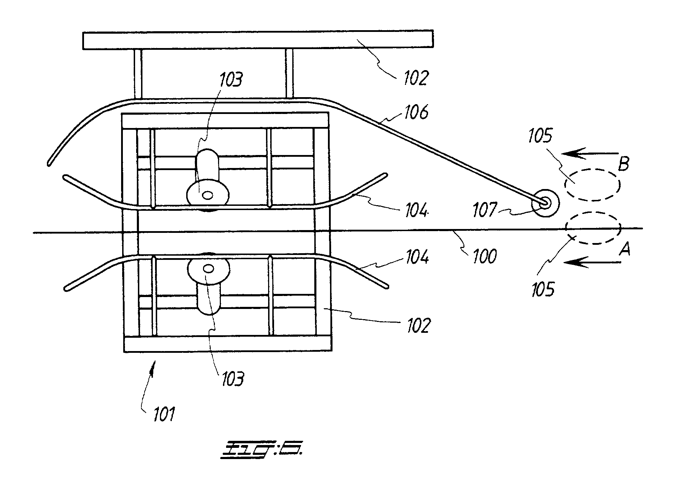

Fig. 6 shows schematically in top view a processing station 101 for cutting wings of slaughtered poultry. Slaughtered poultry 105 is carried by a device according to the invention (not shown) along a transport track 100 of a conveyor (not shown). By means of an eccentrical set up of the carrier relative to the trolley, the poultry can be brought both in position A and in position B.

The processing station consists basically of a frame 102, rotary driven cutting devices 103 for cutting the wings of poultry and wing guide bars 104 for guiding the wings of poultry so that they may take a proper position when being cut.

Also, the frame 102 carries a guide bar 106. The guide bar 106 will act on the poultry which is forwarded, in position B by guiding it sideways outside the working range of the processing station 101. After detouring the processing station the poultry will be guided back into its original position close to the transport track 100.

On the other hand, poultry in position A will not be bothered by guide bar 106 and may proceed into the working range of the station 101. The guide bar 106 is provided at its foremost end with a small rotatable wheel 107 for facilitating the guidance of poultry in position A and poultry in position B.

## Claims

1. Device for processing slaughtered animals (7), in particular birds, or a part thereof on the basis of data recorded by recording means concerning the slaughtered animals (7) or parts thereof, which are conveyed along a route along which the device is disposed, the device comprising:
- a conveyor (1) comprising a plurality of trolleys (12) and carriers (16) for the slaughtered animals (7) or parts thereof, the conveyor (1) running along the route, and
- a processing machine along the route, said processing machine having a working range,
characterized by
- operating means (19) disposed along the route for taking a slaughtered animal (7) or part thereof into or out of the working range of the processing machine, and
- means for controlling the operating means (19) on the basis of the data recorded such that a slaughtered animal (7) or part thereof is taken into or out of the working range of the processing machine.

2. Device according to claim 1, characterized by recording means disposed along the route for recording one or more parameters concerning each slaughtered animal (7) or part thereof being conveyed past the recording means, the operating means (19) being controlled on the basis of data recorded with the recording means.

3. Device according to claim 2, characterized in that the recording means are disposed upstream of the operating means (19).

4. Device according to any of claim 1-3, characterized by a plurality of connecting means (8) each connecting a carrier (6) to a trolley (2).

5. Device according to claim 4, characterized in that the operating means (19) are adapted to interact with the connecting means (8) for taking a slaughtered animal (7) or part thereof into or out of said working range.

6. Device according to claim 4 or 5, characterized in that the connecting means (8) are rotatable about an essentially vertical axis through a predetermined angle relative to the trolley (2).

7. Device according to claim 6, characterized in that the connecting means (8) comprise means for fixing the angular orientation of the carrier (6) relative to the trolley (2).

8. Device according to claim 6 or 7, characterized in that the connecting means have two or more projections which project at right angles to the axis of rotation of the connecting means (8), and which can interact with the operating means (19).

9. Device according to claim 8, characterized in that the length of at least one of the projections is different from the length of the other projections.

10. Device according to claim 8 or 9, characterized in that the connecting means (8) comprise a Maltese cross (18) with a number of segments which are separated from each other by grooves.

11. Device according to claim 10, characterized in that one segment has smaller radial dimensions than the remaining segments.

12. Device according to any of claims 1-11, characterized by a guide element (106) diverging from the route in the direction of conveyance for guiding the animals (7) or parts thereof off the route.

13. Device according to any of claims 1-12, characterized in that each carrier (6) is adapted for accommodating at least one leg of the slaughtered animal.

14. Device according to claim 13, characterized in that the carrier (6) comprises accommodating means (10) for accommodating the legs of the slaughtered animal, and fixing means (11) which, interacting with the accommodating means (10), are adapted to enclose each leg like a ring.

15. Device according to claim 14, characterized in that the accommodating means (10) are formed by an essentially elongated, plate-shaped element.

16. Device according to claim 14 or 15, characterized in that the fixing means (11) are movable relative to the accommodating means (10).

17. Device according to any of claims 14-16, characterized in that the fixing means (11, 15) are adapted to interact with control means (16) disposed along the route to retain the leg in, or release the leg from the carrier (6).

18. Device according to any of claims 4-17, characterized in i that the carriers (6) are disposed eccentrically relative to the axis of rotation of the corresponding connecting means (8) such that the slaughtered animals (7) or parts thereof are also disposed eccentrically relative to said axis of rotation.

19. Device according to any of claims 4-18, characterized in that the carriers (6) are pivotable about a horizontal axis (12) relative to the connecting means (8).

20. Method for processing slaughtered animals (7), in particular birds, or parts thereof, comprising:
- conveying the slaughtered animals (7) or parts thereof along a route along which a processing machine having a working range is disposed and
- taking a slaughtered animal (7) or part thereof into or out of the working range of the processing machine on the basis of data recorded with recording means concerning each slaughtered animal (7) or part thereof.

21. Method according to claim 20, characterized by guiding the slaughtered animals (7) or parts thereof off the route by a guide element (106) diverging from the route in the direction of conveyance.

## Patentansprüche

1. Vorrichtung zum Verarbeiten von Schlachttieren (7), insbesondere Geflügel, oder eines Teils hiervon auf der Basis von Daten, wobei die Daten in Bezug auf die Schlachttiere (7) oder eines Teils hiervon, die entlang einer Route transportiert werden, entlang derer die Vorrichtung angeordnet ist, mittels Aufzeichnungsmittel erfasst werden und die Vorrichtung umfasst:
- einen Förderer (1), wobei der Förderer (1) eine Vielzahl von Wagen (12) und Trägern (16) für die Schlachttiere (7) oder eines Teils hiervon umfasst sowie entlang der Route läuft, und
- eine Verarbeitungsmaschine entlang der Route, wobei die Verarbeitungsmaschine einen Arbeitsbereich aufweist,
gekennzeichnet durch
- Betriebsmittel (19), die entlang der Route angeordnet sind, um ein Schlachttier (7) oder ein Teil hiervon in oder aus dem Arbeitsbereich der Verarbeitungsmaschine zu bringen und
- Mittel zur Steuerung der Betriebsmittel (19) auf der Basis der erfassten Daten, so dass ein Schlachttier (7) oder ein Teil hiervon in den oder aus dem Arbeitsbereich der Verarbeitungsmaschine gebracht wird.

2. Vorrichtung gemäß Anspruch 1, gekennzeichnet durch entlang der Route vorgesehener Aufzeichnungsmittel zum Erfassen eines oder mehrerer Parameter im Bezug auf jedes Schlachttier (7) oder eines Teils hiervon, das an den Aufzeichnungsmitteln vorbei befördert werden, wobei die Betriebsmittel (19) auf der Basis von mittels der Aufzeichnungsmittel erfasster Daten gesteuert werden.

3. Vorrichtung gemäß Anspruch 2, dadurch gekennzeichnet, dass die Aufzeichnungsmittel in Bewegungsrichtung vor den Betriebsmitteln (19) vorgesehen sind.

4. Vorrichtung nach einem der Ansprüche 1 bis 3, gekennzeichnet durch eine Vielzahl von Verbindungsmitteln (8), die jeweils einen Träger (6) mit einem Wagen (2) verbinden.

5. Vorrichtung nach Anspruch 4, dadurch gekennzeichnet, dass die Betriebsmittel (19) zum Wechselwirken mit den Verbindungsmitteln (8) dafür ausgebildet sind, ein Schlachttier (7) oder einen Teil hiervon in oder aus dem Arbeitsbereich zu bringen.

6. Vorrichtung gemäß Anspruch 4 oder 5, dadurch gekennzeichnet, dass die Verbindungsmittel (8) um eine im Wesentlichen vertikale Achse mit einem vorbestimmten Winkel relativ zum Wagen (2) drehbar sind.

7. Vorrichtung gemäß Anspruch 6, dadurch gekennzeichnet, dass die Verbindungsmittel (8) Mittel zum Fixieren der winkligen Ausrichtung des Trägers (6) relativ zum Wagen (2) umfassen.

8. Vorrichtung gemäß Anspruch 6 oder 7, dadurch gekennzeichnet, dass die Verbindungsmittel zwei oder mehr Vorsprünge aufweisen, die rechtwinklig bezüglich der Rotationsachse der Verbindungsmittel (8) herausragen und mit den Betriebsmitteln (19) wechselwirken können

9. Vorrichtung gemäß Anspruch 8, dadurch gekennzeichnet, dass die Länge wenigstens einer der Vorsprünge unterschiedlich zu der Länge der anderen Vorsprünge ist.

10. Vorrichtung gemäß Anspruch 8 oder 9, dadurch gekennzeichnet, dass die Verbindungsmittel (8) ein Malteserkreuz (18) mit einer Anzahl von Abschnitten umfassen, die mittels Ausnehmungen von den anderen getrennt sind.

11. Vorrichtung nach Anspruch 10, dadurch gekennzeichnet, dass ein Abschnitt eine kleinere radiale Abmessung aufweist als die restlichen Abschnitte.

12. Vorrichtung nach einem der Ansprüche 1 bis 11, gekennzeichnet durch ein von der Route in Richtung der Beförderung abweichendes Führungselement (106), um die Tiere (7) oder Teile hiervon von der Route wegzuführen.

13. Vorrichtung nach einem der Ansprüche 1 bis 12, dadurch gekennzeichnet, dass jeder Träger (6) zur Aufnahme wenigstens eines Beines des Schlachttieres angepasst ist.

14. Vorrichtung nach Anspruch 13, dadurch gekennzeichnet, dass der Träger (6) Aufnahmemittel (10) zur Aufnahme der Beine des Schlachttieres und Fixiermittel (11) umfasst, die in Wechselwirkung mit den Aufnahmemitteln (10) dafür ausgebildet sind, jedes Bein wie einen Ring zu umschließen.

15. Vorrichtung nach Anspruch 14, dadurch gekennzeichnet, dass die Aufnahmemittel (10) durch ein im Wesentlichen angezogenes, plattenförmiges Element gebildet sind.

16. Vorrichtung nach Anspruch 14 oder 15, dadurch gekennzeichnet, dass die Fixiermittel (11) relativ zu den Aufnahmemitteln (10) bewegbar sind.

17. Vorrichtung nach einem der Ansprüche 14 bis 16, dadurch gekennzeichnet, dass die Fixiermittel (11, 15) zum Wechselwirken mit Steuerungsmitteln (16), die entlang der Route vorgesehen sind, dazu .ausgebildet sind, das Bein im beziehungsweise vom Träger (6) festzuhalten oder freizugeben.

18. Vorrichtung nach einem der Ansprüche 4 bis 17, dadurch gekennzeichnet, dass die Träger (6) relativ zur Rotationsachse der entsprechenden Verbindungsmittel (8) exzentrisch angeordnet sind, so dass die Schlachttiere (7) oder Teile hiervon ebenfalls relativ zu dieser Rotationsachse exzentrisch angeordnet sind.

19. Vorrichtung nach einem der Ansprüche 4 bis 18, dadurch gekennzeichnet, dass die Träger (6) um eine horizontale Achse (12) relativ zu den Verbindungsmitteln (8) schwenkbar sind.

20. Verfahren zum Verarbeiten von Schlachttieren (7), insbesondere Geflügel, oder eines Teils hiervon, umfassend:
- Befördern der Schlachttiere (7) oder Teile hiervon entlang einer Route, entlang derer eine Verarbeitungsmaschine angeordnet ist, die einen Arbeitsbereich aufweist und
- Bringen eines Schlachttieres (7) oder eines Teils hiervon in oder aus dem Arbeitsbereich der Verarbeitungsmaschine auf der Basis von Daten, die bezüglich jedem Schlachttier (7) oder Teil hiervon mittels Aufzeichnungsmittel erfasst werden.

21. Verfahren nach Anspruch 20, gekennzeichnet durch Führen der Schlachttiere (7) oder von Teilen hiervon weg von der Route mittels einem Führungselement (106), das von der Route in Richtung der Beförderung abweicht.

## Revendications

1. Dispositif pour traiter des animaux abattus (7), en particulier des volailles, ou une partie de ces animaux, à partir de données enregistrées par des moyens d'enregistrement concernant les animaux abattus (7) ou des parties de ceux-ci, qui sont transportés sur un trajet le long duquel le dispositif est disposé, le dispositif comportant :
- un convoyeur (1) comportant une pluralité de chariots de transport (12) et de supports (16) pour les animaux abattus (7) ou des parties de ceux-ci, le convoyeur (1) se déplaçant le long du trajet, et
- une machine de traitement le long du trajet, ladite machine de traitement présentant une portée de travail,
caractérisé par :
- des moyens opératoires (19) disposés le long du trajet pour amener un animal abattu (7) ou une partie de cet animal dans ou hors de la portée de travail de la machine de traitement, et
- des moyens pour contrôler les moyens opératoires (19) à partir des données enregistrées, de telle façon qu'un animal abattu (7) ou une partie de cet animal soit amené dans ou hors de la portée de travail de la machine de traitement.

2. Dispositif selon la revendication 1, caractérisé par des moyens d'enregistrement disposés le long du trajet pour enregistrer un ou plusieurs paramètres concernant chaque animal abattu (7) ou une partie de cet animal qui est transporté au-delà des moyens d'enregistrement, les moyens opératoires (19) étant contrôlés à partir des données enregistrées par les moyens d'enregistrement.

3. Dispositif selon la revendication 2, caractérisé en ce que les moyens d'enregistrement sont disposés en amont des moyens opératoires (19).

4. Dispositif selon l'une quelconque des revendications 1 à 3, caractérisé par une pluralité de moyens de liaison (8) reliant chacun un support (6) à un chariot de transport (2).

5. Dispositif selon la revendication 4, caractérisé en ce que les moyens opératoires (19) sont aptes à coopérer avec les moyens de liaison (8) pour amener un animal abattu (7) ou une partie de cet animal dans ou hors de ladite portée de travail.

6. Dispositif selon la revendication 4 ou 5, caractérisé en ce que les moyens de liaison (8) sont susceptibles de tourner autour d'un axe sensiblement vertical en faisant un angle prédéterminé par rapport au chariot de transport (2).

7. Dispositif selon la revendication 6, caractérisé en ce que les moyens de liaison (8) comportent des moyens pour fixer l'orientation angulaire du support (6) par rapport au chariot de transport (2).

8. Dispositif selon la revendication 6 ou 7, caractérisé en ce que les moyens de liaison comportent au moins deux parties en saillie qui font saillie à angle droit par rapport à l'axe de rotation des moyens de liaison (8), et qui peuvent coopérer avec les moyens opératoires (19).

9. Dispositif selon la revendication 8, caractérisé en ce que la longueur d'au moins l'une des parties en saillie est différente de la longueur des autres parties en saillie.

10. Dispositif selon la revendication 8 ou 9, caractérisé en ce que les moyens de liaison (8) comportent une croix de Malte (18) avec un certain nombre de segments qui sont séparés l'un de l'autre par des rainures.

11. Dispositif selon la revendication 10, caractérisé en ce qu'un segment présente des dimensions radiales plus faibles que celles des segments restants.

12. Dispositif selon l'une quelconque des revendications 1 à 11, caractérisé par un élément de guidage (106) divergeant du trajet dans la direction de transport pour guider les animaux (7) ou des parties de ceux-ci en dehors du trajet.

13. Dispositif selon l'une quelconque des revendications 1 à 12, caractérisé en ce que chaque support (6) est apte à loger au moins une patte de l'animal abattu.

14. Dispositif selon la revendication 13, caractérisé en ce que le support (6) comporte des moyens de logement (10) pour loger les pattes de l'animal abattu, et des moyens de fixation (11) qui, en coopérant avec les moyens de logement (10), sont aptes à entourer chaque patte à la façon d'un anneau.

15. Dispositif selon la revendication 14, caractérisé en ce que les moyens de logement (10) sont formés par un élément en forme de plaque et sensiblement oblong.

16. Dispositif selon la revendication 14 ou 15, caractérisé en ce que les moyens de fixation (11) sont mobiles par rapport aux moyens de logement (10).

17. Dispositif selon l'une quelconque des revendications 14 à 16, caractérisé en ce que les moyens de fixation (11, 15) sont aptes à coopérer avec des moyens de contrôle (16) disposés le long du trajet pour retenir la patte dans le support ou pour libérer la patte du support (6).

18. Dispositif selon l'une quelconque des revendications 4 à 17, caractérisé en ce que les supports (6) sont disposés excentriquement par rapport à l'axe de rotation des moyens de liaison correspondants (8), de telle façon que les animaux abattus (7) ou des parties de ceux-ci soient également disposés excentriquement par rapport audit axe de rotation.

19. Dispositif selon l'une quelconque des revendications 4 à 18, caractérisé en ce que les supports (6) sont susceptibles de pivoter autour d'un axe horizontal (12) par rapport aux moyens de liaison (8).

20. Procédé pour traiter des animaux abattus (7), en particulier des volailles, ou des parties de ceux-ci, comprenant les étapes consistant :
- à transporter les animaux abattus (7) ou des parties de ceux-ci sur un trajet le long duquel est disposée une machine de traitement présentant une portée de travail, et
- à amener un animal abattu (7) ou une partie de cet animal dans ou hors de la portée de travail de la machine de traitement, à partir des données enregistrées avec des moyens d'enregistrement et concernant chaque animal abattu (7) ou partie de cet animal.

21. Procédé selon la revendication 20, caractérisé en ce qu'on guide les animaux abattus (7) ou des parties de ceux-ci hors du trajet par un élément de guidage (106) divergeant du trajet dans la direction de transport.
